# EUROPÄISCHE PATENTANMELDUNG

(11) **EP 3 889 406 A1**
(43) Veröffentlichungstag der Anmeldung: **06.10.2021**
(21) Anmeldenummer: 21160410.3
(22) Anmeldetag: 03.03.2021
(51) Int. Cl.: F01N 3/20, F01N 13/00, F01N 3/30

(54) **REDUKTIONSMITTELDOSIERSYSTEM MIT ZUMINDEST ZWEI DOSIERSTELLEN**

(30) Priorität: 03.04.2020 DE 102020002143
(71) Anmelder: Albonair GmbH, 44263 Dortmund (DE)
(72) Erfinder: Müller, David, 58675 Hemer (DE); Lerche, Dieter, 42489 Wülfrath (DE); Rötzheim, Rainer, 53123 Bonn (DE); Overhoff, Werner, 45772 Marl (DE); Beckmann, Björn, 44263 Dortmund (DE); Abraham, Simon, 44269 Dortmund (DE); Visnakov, Stanislav, 48249 Dülmen (DE)
(74) Vertreter: Patentanwaltskanzlei Methling

(57) **Zusammenfassung**

Die Erfindung betrifft ein Reduktionsmitteldosiersystem zur Einspritzung eines Reduktionsmittels in den Abgasstrom eines Verbrennungsmotors (50) zur selektiven katalytischen Reduktion mit zumindest einer Förderpumpe (3), mittels derer Reduktionsmittel aus einem Reduktionsmitteltank (40) über eine Saugleitung (31) aus dem Tank (40) angesaugt und über zumindest eine Druckleitung (32) zu zumindest einer Dosierstelle zur Einleitung in den Abgasstrom des Verbrennungsmotors (50) gefördert wird, wobei die Druckleitung (32) zumindest ein schaltbares Mehrwegeventil (4) aufweist, an welches zumindest zwei Ausgangsleitungen (41, 42) angeschlossen sind, die in zwei verschiedene Dosierstellen (21, 22) münden, über die das Reduktionsmittel in den Abgasstrom einleitbar ist. Ferner betrifft die Erfindung ein Verfahren zum Betrieb eines Reduktionsmitteldosiersystem zur Einspritzung eines Reduktionsmittels in den Abgasstrom eines Verbrennungsmotors (50) zur selektiven katalytischen Reduktion.

## Beschreibung

Die Erfindung betrifft ein Reduktionsmitteldosiersystem zur Einleitung eines Reduktionsmittels in den Abgasstrom eines Verbrennungsmotors zur selektiven katalytischen Reduktion mit zumindest einer Förderpumpe, mittels derer Reduktionsmittel aus einem Reduktionsmitteltank über eine Saugleitung aus einem Reduktionsmitteltank angesaugt und über zumindest eine Druckleitung gefördert und über zumindest eine Dosierstelle in den Abgasstrom des Verbrennungsmotors eingeleitet wird.

Ferner betrifft die Erfindung ein Verfahren zum Betrieb eines Reduktionsmitteldosiersystems zur Einspritzung eines Reduktionsmittels in den Abgasstrom eines Verbrennungsmotors zur selektiven katalytischen Reduktion mit zumindest einer Förderpumpe, mittels derer Reduktionsmittel aus einem Reduktionsmitteltank über eine Saugleitung angesaugt, über zumindest eine Druckleitung gefördert und über zumindest eine Dosierstelle in den Abgasstrom des Verbrennungsmotors eingeleitet wird.

Derartige Dosiersysteme und Verfahren zum Betrieb solcher Dosiersysteme sind aus dem Stand der Technik bekannt. Dabei wird das Reduktionsmittel üblicherweise in Form eines Aerosols in den Abgasstrom des Verbrennungsmotors eingeleitet, wobei aufgrund der hohen Abgastemperaturen ein Verdampfen des Aerosols erfolgt. Problematisch sind dabei jedoch die Kaltstartphasen, in denen die Abgastemperatur noch zu niedrig ist, um das in den Abgasstrom des Verbrennungsmotors eingeleitete Aerosol zu verdampfen.

Während dieser Kaltstartphasen ist somit oftmals die gewünschte selektive katalytische Reduktion von Stickoxiden unzureichend.

Katalysatoren zur selektiven katalytischen Reduktion (englisch: selective catalyic reduction, abgekürzt: SCR), sogenannte SCR-Katalysatoren, werden eingesetzt, um die Stickoxydemission von Dieselmotoren, Feuerungsanlagen, Müllverbrennungsanlagen, Industrieanlagen und dergleichen zu vermindern. Hierzu wird ein Reduktionsmittel mit einer Dosiervorrichtung in das Abgassystem eingedüst. Als Reduktionsmittel dient Ammoniak oder eine Ammoniaklösung oder ein anderes Reduktionsmittel.

Da das Mitführen von Ammoniak in Fahrzeugen sicherheitskritisch ist, wird Harnstoff in wässriger Lösung mit üblicherweise 32,5 % Harnstoffanteil, insbesondere gemäß DIN 70070, eingesetzt. Im Abgas zersetzt sich der Harnstoff bei Temperaturen oberhalb von 150° Celsius in gasförmiges Ammoniak und CO₂. Parameter für die Zersetzung des Harnstoffes sind im Wesentlichen Zeit (Verdampfungs- und Reaktionszeit), Temperatur und Tröpfchengröße der eingedüsten Harnstofflösung. In diesen SCR-Katalysatoren wird durch selektive katalytische Reduktion der Ausstoß von Stickoxyden um etwa 90 % reduziert.

Mit dem Begriff der Reduktionsmittellösung oder des Reduktionsmittels ist jedes zur selektiven katalytischen Reduktion geeignete Reduktionsmittel umfasst, vorzugsweise kommt hierzu eine Harnstofflösung gemäß DIN 70070 zum Einsatz. Die Erfindung ist jedoch nicht hierauf beschränkt. Die Begriffe Reduktionsmitteldosiersystem bzw. Dosiersystem werden im Sinne der Erfindung synonym verwendet. Die Begriffe Düse und Einspritzdüse werden ebenfalls synonym verwendet.

Bei den bekannten Reduktionsmitteldosiersystemen zur Einspritzung eines Reduktionsmittels in den Abgasstrom eines Verbrennungsmotors zur selektiven katalytischen Reduktion können sich die relativ niedrigen Temperaturen der Abgase z. B. bei einem Kaltstart des Verbrennungsmotors, d.h. bevor die Betriebstemperatur des Verbrennungsmotors erreicht ist, ungünstig auf die Funktionsweise eines SCR-Katalysators auswirken.

Nach der Einspritzung des Harnstoffs in wässriger Lösung in den Abgasstrang muss für die SCR-Reaktion zunächst Ammoniak (NH₃) gebildet werden. Hierbei wird das reduzierend wirkende Ammoniak durch die thermische Zersetzung von Harnstoff (Thermolyse) und die Hydrolyse der entstehenden Isocyansäure freigesetzt. Die Aufbereitung unterteilt sich somit in die folgenden beiden Reaktionsschritte:
Thermolyse

   (NH₂)₂CO → NH₃ + HNCO
Hydrolyse

   HNCO + H₂O → NH₃ + CO₂

In der ersten Reaktion, der Thermolyse, wird durch den Einfluss der Temperatur Harnstoff in Ammoniak (NH₃) und Isocyansäure (HNCO) umgewandelt. Im zweiten Schritt folgt unter Anwesenheit von Wasser die Hydrolyse, in der die Isocyansäure ebenfalls in Ammoniak unter Bildung von Kohlendioxid (CO₂) umgewandelt wird. Relativ niedrige Temperaturen, wie sie beispielsweise beim Kaltstart des Verbrennungsmotors vorliegen, können den Ablauf dieser Reaktionen verlangsamen.

Die Aufgabe der Erfindung ist es daher, ein Reduktionsmitteldosiersystem zur Einleitung eines Reduktionsmittels in den Abgasstrom eines Verbrennungsmotors zur selektiven katalytischen Reduktion derart weiterzubilden, dass die Reduktion von Stickoxiden und die Funktionsweise eines SCR-Katalysators, insbesondere bei niedrigen Temperaturen wie sie beispielsweise bei einem Kaltstart eines Verbrennungsmotors vorkommen, d.h. insbesondere bevor die Betriebstemperatur des Verbrennungsmotors erreicht ist, verbessert wird.

Diese Aufgabe wird erfindungsgemäß durch ein Reduktionsmitteldosiersystem gemäß Anspruch 1 und ein Verfahren zum Betrieb eines Reduktionsmitteldosiersystems gemäß Anspruch 9 gelöst. Vorteilhafte Weiterbildungen der Erfindung sind in den abhängigen Ansprüchen angegeben.

Im Sinne der Erfindung werden die Begriffe Reduktionsmitteldosiersystem und Dosiersystem synonym benutzt.

Besonders vorteilhaft bei dem Reduktionsmitteldosiersystem zur Einspritzung eines Reduktionsmittels in den Abgasstrom eines Verbrennungsmotors, insbesondere eines Fahrzeuges, zur selektiven katalytischen Reduktion mit zumindest einer Förderpumpe, mittels derer Reduktionsmittel aus einem Reduktionsmitteltank über eine Saugleitung aus einem Reduktionsmitteltank angesaugt und über zumindest eine Druckleitung zu zumindest einer Dosierstelle zur Einleitung in den Abgasstrom des Verbrennungsmotors gefördert wird, ist es, dass die Druckleitung zumindest ein schaltbares Mehrwegeventil aufweist, an welches zumindest zwei Ausgangsleitungen angeschlossen sind, die in zwei verschiedene Dosierstellen münden, über die das Reduktionsmittel in den Abgasstrom einleitbar ist.

Durch die erfindungsgemäße Ausgestaltung eines Reduktionsmitteldosiersystems kann somit durch die Ansteuerung des schaltbaren Mehrwegeventils zwischen zumindest zwei verschiedenen Dosierstellen umgeschaltet werden, über die das Reduktionsmittel in den Abgastrakt des Verbrennungsmotors eingeleitet wird. Dadurch ist die Dosierung an zumindest zwei Dosierstellen an verschiedenen Positionen möglich, beispielsweise erstens stromauf eines motornahen SCR-Katalysators und zweitens stromauf des SCR-Hauptkatalysators. In diesem Fall bezieht sich die Angabe stromauf auf die Strömung des Abgases des Verbrennungsmotors im Abgastrakt.

Nach dem Stand der Technik ist es erforderlich, dass beim Einsatz dosierender Pumpen jede Dosierstelle mittels einer eigenen Fördereinheit mit Reduktionsmittel versorgt wird. Durch die Erfindung ist es in besonders vorteilhafter Weise möglich, mittels einer dosierenden Pumpe eine Mehrzahl von Dosierstellen mit Reduktionsmittel zu versorgen. Dabei kann eine dosierende Pumpe eingesetzt werden, wodurch eine exakte Massenstromeinstellung ermöglicht wird.

Durch die Verwendung eines Reduktionsmittel-Umschaltventils wird eine Dosierpumpe und dessen aufwendige Ansteuerung über zwei Transistoren eingespart. Es wird nur eine Dosierpumpe eingesetzt, die für die Dosiergenauigkeit verantwortlich ist.

Ferner können temperaturunempfindliche Düsen, bei denen es sich um passive Elemente handelt, an den Dosierstellen ohne Sensoren und/oder Aktuatoren verwendet werden. Es werden dadurch keine empfindlichen Bauteile besonders hohen Abgastemperaturen ausgesetzt. Hierdurch wird die Langlebigkeit des Reduktionsmitteldosiersystems gegenüber den aus dem Stand der Technik bekannten Systemen deutlich verbessert.

Dabei kommt erfindungsgemäß lediglich eine Förderpumpe zur exakten Zumessung des Massenstromes unter Verwendung eines schnell umschaltenden Ventils zur Zuteilung zur jeweiligen Dosierstelle zum Einsatz.

Mittels der Förderpumpe wird somit Reduktionsmittel aus einem Reduktionsmitteltank über eine Saugleitung aus einem Reduktionsmitteltank angesaugt und über zumindest eine Druckleitung gefördert und der Massenstrom an Reduktionsmittel eingestellt.

Vorzugsweise ist die erste Dosierstelle durch eine beheizbare Einspritzdüse gebildet, mittels derer das über die erste Dosierstelle geleitete Reduktionsmittel vor der Einleitung in den Abgasstrom verdampfbar ist.

Durch die Ausbildung der ersten Dosierstelle in Form einer beheizbaren Einspritzdüse kann das über die erste Dosierstelle in den Abgastrakt eingeleitete Reduktionsmittel vor der Einleitung in den Abgastrakt des Verbrennungsmotors verdampft werden, um insbesondere in der Kaltstartphase des Verbrennungsmotors unmittelbar nach dem Anlassen des Verbrennungsmotors die Qualität der selektiven katalytischen Reduktion zu verbessern. In der Kaltstartphase hat der Verbrennungsmotor noch nicht seine Betriebstemperatur erreicht, wodurch ebenfalls die Abgastemperatur unter der im Dauerbetrieb erreichten Temperatur liegt. Infolgedessen reicht die Abgastemperatur während der Kaltstartphase nicht aus, um das in den Abgastrakt eingeleitete Reduktionsmittel zu verdampfen, woraus eine nur unzureichende selektive katalytische Reduktion von Stickoxiden im SCR-Katalysator resultiert. Durch die Ausbildung der ersten Dosierstelle in Form einer beheizbaren Einspritzdüse, mittels derer das Reduktionsmittel vor der Einleitung in den Abgastrakt verdampfbar ist, kann somit die Qualität der selektiven katalytischen Reduktion von Stickoxiden im SCR-Katalysator auch während einer Kaltstartphase deutlich gesteigert werden. Die Beheizung einer beheizbaren Einspritzdüse kann beispielsweise mittels eines oder mehrerer elektrischer Heizwiderstände erfolgen.

Insbesondere ist dadurch somit eine Erwärmung des Reduktionsmittels auf ein Temperaturniveau oberhalb der momentanen Abgastemperatur möglich. Ferner kann eine Steuerung oder eine Regelung der Heizleistung vorgesehen sein. Hierdurch ist eine Erwärmung des Reduktionsmittels auf ein gewünschtes und/oder vorgebbares Temperaturniveau möglich.

Bevorzugt ist die zweite Dosierstelle durch eine Zweistoffdüse gebildet, mittels derer das über die zweite Dosierstelle geleitete Reduktionsmittel innerhalb oder außerhalb der Zweistoffdüse mittels Druckluft zerstäubt werden kann. Insbesondere kann das Dosiersystem eine Druckluftversorgung zur Bereitstellung der Druckluft zur Zerstäubung des Reduktionsmittels aufweisen und/oder mit einem Druckluftsystem des Kraftfahrzeuges verbindbar sein. In diesem Fall weist das Dosiersystem einen Drucklufteingang auf, der mit einem Druckluftsystem des Kraftfahrzeuges verbunden werden kann und über den Druckluft aus dem kraftfahrzeugseitigen Druckluftsystem eingeleitet wird.

Dabei kann die Düse als außenmischende Zweistoffdüse ausgebildet sein. Insbesondere können dabei ein Reduktionsmittelaustritt und ein Druckluftaustritt konzentrisch angeordnet sein. Insbesondere kann der Druckluftaustritt den Reduktionsmittelaustritt dabei zumindest teilweise oder vollständig umgeben. Alternativ kann der Reduktionsmittelaustritt den Druckluftaustritt zumindest teilweise oder vollständig umgeben. Bei dieser Art der außenmischenden Zweistoffdüse wird somit das Gemisch aus Harnstofflösung und Druckluft außerhalb der Düse gebildet.

Alternativ oder kumulativ kann eine Gemischbildung innerhalb der Düse erfolgen. Somit kann auch eine innenmischende Düse realisiert werden. Bei einer ersten Ausführungsform einer solchen innenmischenden Düse mündet der Druckluftaustritt in eine Reduktionsmittelkammer innerhalb der Düse. Bei einer zweiten Ausführungsform einer solchen innenmischenden Düse mündet der Druckluftaustritt über ein Ventil noch vor der Reduktionsmittelkammer in die Reduktionsmittelleitung.

Ferner kann die Düse derart ausgebildet sein, sodass eine Kombination von außerhalb der Düse und innerhalb der Düse erfolgender Gemischaufbereitung erfolgt. Hierzu kann ein Druckluftaustritt über ein Ventil noch vor der Reduktionsmittelkammer in die Reduktionsmittelleitung münden und/oder es kann ein Druckluftaustritt in die Reduktionsmittelkammer münden und ein weiterer Druckluftaustritt kann wie bei der oben dargestellten außenmischenden Düse in einen Druckluftaustritt der Düse münden und eine Aerosolbildung außerhalb der Düse bewirken.

Durch die Verwendung von Druckluft zur Aerosolbildung kann die gewünschte Qualität der Tröpfchenbildung eingestellt werden. Dabei kann die Qualität des gebildeten Aerosols den aktuellen Betriebsbedingungen des Verbrennungsmotors angepasst werden, da bei höheren Abgastemperaturen eine schnellere Verdampfung der Tröpfchen erfolgt. Lediglich bei niedrigeren Abgastemperaturen ist somit die Bildung eines besonders feinen Aerosols mit besonders kleinen Tröpfchendurchmessern erforderlich.

Vorzugsweise handelt es sich bei der Förderpumpe um eine intermittierend fördernde Pumpe mit aufeinander folgenden Pumpenhüben, insbesondere eine Magnetkolbenpumpe.

Der Vorteil einer solchen intermittierend fördernden Pumpe mit aufeinander folgenden Pumpenhüben ist zum einen die Möglichkeit, den geförderten Massenstrom mit jedem Pumpenhub exakt zu kennen und somit den Massenstrom über die Ansteuerung der Pumpe exakt einstellen zu können. Ein weiterer Vorteil einer solchen intermittierend fördernden Pumpe mit aufeinander folgenden Pumpenhüben ist die Möglichkeit, das in der Druckleitung der Pumpe angeordnete schaltbare Mehrwegeventil, welches der Umschaltung zwischen den beiden Dosierstellen dient, in den jeweiligen Förderpausen der intermittierend fördernden Pumpe umschalten zu können. So kann durch eine entsprechende Ansteuerung des schaltbaren Mehrwegeventils nach jedem Pumpenhub oder nach einer festlegbaren Anzahl von Pumpenhüben zwischen den beiden Dosierstellen umgeschaltet werden.

Bei einer intermittierend fördernden Pumpe erfolgt das Umschalten nur in den zeitlichen Phasen der nichtaktivierten Pumpe und zusätzlich mit einer zeitlichen Verzögerung nach einen Pumpenhub, damit sichergestellt ist, dass momentan kein Reduktionsmittelfluss vorliegt. Das gleiche gilt bei Umschaltung vor einen Pumpenhub, d.h. die Umschaltung muss zeitlich rechtzeitig geschehen oder der Pumpenhub muss verzögert werden, damit das Ventil definitiv nur einen Ausgang geöffnet hat ("vollständiges Umschalten" genannt). Nur mit dieser zeitlich peniblen Umschaltung ist eine exakte Zuteilung zur jeweiligen Dosierstelle möglich. Ebenso ist nur so die jeweilige gesamte dosierte Masse zu einer Dosierstelle summierungsfähig.

Damit keine Schwankungen oder Qualitätsverluste zu den einzelnen Dosiermassenströmen der jeweiligen Dosierstelle entstehen, wird ein schnelles Umschaltventil bevorzugt, welches von Pumpenhub zu Pumpenhub umschalten kann. Somit wird ein nahezu kontinuierlicher bzw. gleichmäßiger Volumenstrom gleichzeitig zur jeweiligen Dosierstelle erzielt. Somit wird faktisch für den Abgasmassenstrom ein kontinuierlicher Volumenstrom zur jeweiligen Dosierstelle bereitgestellt.

Bei einer kontinuierlich fördernden Pumpe kann ein Reservoir zur Zwischenspeicherung für die Abmilderung der Dynamik bei Schaltvorgängen angeordnet sein. Die Zuweisung auf die Dosierstellen erfolgt durch das Umschaltventil über die Zuweisung zeitlicher Öffnungsanteile. Hierbei definiert der Zeitraum der Öffnung das dosierte Volumen.

Die Umschaltung über die entsprechende Ansteuerung des schaltbaren Mehrwegeventils kann variieren und nach unterschiedlichen Strategien erfolgen.

Es können einzelne Hübe auf die erste Dosierstelle geschaltet werden, je nach Bedarf des motornahen SCR-Katalysators an Reduktionsmittel. Dies ist bei niedriger Dosieranforderung der beheizbaren Düse an der ersten Dosierstelle sinnvoll bzw. nötig, um einen hinreichend gleichmäßigen Reduktionsmittel-Volumenstrom und gleichmäßigen Stickoxid-Umsatz zu gewährleisten.

Alternativ kann blockweise umgeschaltet werden, um die Schaltzyklen des Umschaltventils zu reduzieren. Das heißt, bei beispielsweise 10 geforderten Pumpenhüben pro Sekunde zur beheizbaren Düse an der ersten Dosierstelle wird nicht alle 100ms ein Pumpenhub dorthin umgeschaltet, sondern es werden beispielsweise eine Anzahl von 3 Pumpenhüben als Block dorthin gelenkt, dann anschließend eine Anzahl von 4 Pumpenhüben und später in dieser Sekunde noch einmal eine Anzahl von 3 Pumpenhüben. Von 10 möglichen Umschaltungen ist auf diese Wiese auf lediglich 3 Umschaltvorgänge reduziert worden. In diesem Beispiel sind so die Lastwechsel auf 30% herabgesetzt worden. Diese Vorgehensweise kann in beliebigen Kombinationen zur Reduzierung der Anzahl der Lastwechsel ausgeführt werden.

Ferner hat die blockweise Umschaltung des schaltbaren Mehrwegeventils den Vorteil, dass zur Begünstigung eines vollständigen Umschaltens zusätzliche Wartezeiten eingebaut werden können. Dies ist von Vorteil, falls die Wartezeit für ein vollständiges Umschalten größer ist als die Stillstandzeit des nicht mehr fließenden Reduktionsmittels bei maximaler Pumpenfrequenz. Ohne eine derartige blockweise Umschaltung müssten zusätzliche Wartezeiten eingebaut werden und die im Mischbetrieb maximal darstellbare Pumpfrequenz würde reduziert. Folglich würde die Dosiermenge reduziert.

Bei einer Pumpenfrequenz von beispielsweise 55Hz liegt die Periodendauer von Hub zu Hub bei 18ms, davon 8ms Ansteuerzeit der Pumpe und ca. 5ms für die Reduktionsmittelströmung bis zum Stillstand. Hieraus resultieren 13ms, in denen das Ventil nicht betätigt werden kann, es bleiben nur 5ms für das vollständige Umschalten übrig. Daher muss vor dem Umschalten eine Pause eingebaut werden, bevor der nächste Pumpenhub folgen darf. Dieses Problem wird bei einer blockweisen Umschaltung reduziert.

Es kann auf eine Dosierstelle komplett umgeschaltet werden, falls nur die beheizbare Düse der ersten Dosierstelle bei zu niedrigen Abgastemperaturen oder alternativ nur die Zweistoffdüse der zweiten Dosierstelle bei genügend hoher Abgastemperatur betrieben zu werden braucht. Damit kann die maximale Dosiermenge der Förderpumpe ausgereizt werden und der Zweistoffdüse der zweiten Dosierstelle zugeteilt werden. Diese Vorgehensweise bewirkt somit ebenfalls einen positiven Effekt zur Reduzierung der Umschaltzyklen.

Selbstverständlich wird nur dann umgeschaltet bzw. zurückgeschaltet, wenn ein Reduktionsmittelmassenstrom zur jeweils anderen Dosierstelle erforderlich wird.

Vorzugsweise weist das Reduktionsmitteldosiersystem ein Steuergerät auf und/oder ist mit einem Steuergerät des Kraftfahrzeuges verbindbar, mittels dessen in Abhängigkeit der aktuellen Betriebsdaten des Verbrennungsmotors wie beispielsweise der Abgastemperatur der jeweilige Bedarf an Reduktionsmittelmassenstrom zur jeweiligen Dosierstelle berechnet wird.

In einer bevorzugten Ausführungsform weist das Dosiersystem eine Druckluftversorgung mit zumindest einem Luftschaltventil und/oder zumindest einem insbesondere pulsweitenmodulierten Proportionalventil zur Bereitstellung von Druckluft insbesondere zur Zerstäubung des Reduktionsmittels mittels Druckluft an der zweiten Dosierstelle auf.

Bei der Druckluftversorgung kann es sich um einen integralen Bestandteil des Dosiersystems handeln, d.h. das Dosiersystem kann einen Kompressor oder dergleichen zur Bereitstellung von Druckluft aufweisen und/oder das Dosiersystem weist einen Drucklufteingang auf, der mit einem kraftfahrzeugseitigen Druckluftsystem verbindbar ist und wobei über den Drucklufteingang Druckluft für das Dosiersystem bereitgestellt wird.

Mittels eines Luftschaltventils kann die Druckluftzufuhr an- und abgeschaltet werden. Mittels eines pulsweitenmodulierten Proportionalventils kann der Luftdruck am Ventilausgang durch eine entsprechende Ansteuerung des Ventils auf das gewünschte Druckniveau geregelt werden.

Die bereitgestellte Druckluft kann insbesondere zur Zerstäubung des Reduktionsmittels mittels Druckluft an der zweiten Dosierstelle verwendet werden. Alternativ oder kumulativ kann mittels der Druckluft das Dosiersystem bei Dosierpausen oder einer Dosierbeendigung nach einem Abstellen des Verbrennungsmotors von Reduktionsmittelrückständen durch ein Freiblasen der reduktionsmittelführenden Leitungen und Düsen gereinigt werden. Hierdurch wird insbesondere die Frostsicherheit des Reduktionsmitteldosiersystems erhöht.

Vorzugsweise weist das Dosiersystem eine Druckluftversorgung mit zumindest einem Ventil, insbesondere einem pulsweitenmodulierten Proportionalventil, zur Bereitstellung von Druckluft auf, wobei stromauf oder stromab des Proportionalventils ein Abzweig angeordnet ist, der ein Luftschaltventil aufweist und wobei der Abzweig in die Ausgangsleitung zu der ersten Dosierstelle mündet.

Durch eine Öffnung des Luftschaltventils in dem Abzweig, der in die Ausgangsleitung zu der ersten Dosierstelle mündet, kann die erste Dosierstellen von Reduktionsmittel freigeblasen werden, um diese in Dosierpausen zu reinigen.

Wenn der Abzweig mit dem Luftschaltventil direkt am Lufteintritt der Druckluftversorgung angeschlossen ist, kann die beheizbare Düse an der ersten Dosierstelle völlig unabhängig vom Betriebszustand der luftunterstützten Düse an der zweiten Dosierstelle freigeblasen werden, auch zeitlich während des Betriebes. Dieses Freiblasen erfolgt aber in diesem Fall mit dem vollen Versorgungsdruck des Druckluftsystems des Kraftfahrzeuges. Bei einer verstopften beheizbaren Düse an der ersten Dosierstelle läge also der gleiche Druck wie im Druckluftversorgungssystem an. Bei normalem Freiblasen, also bei intakter nicht verstopfter Düse, läge durch den Druckfall am Schaltventil ein etwas geringerer Druck vor der beheizbaren Düse an als er im Druckluftversorgungssystem vorherrscht. Dieser Druck kann durch ein Anpassen der Bohrung im Schaltventil einmalig eingestellt werden.

Bevorzugt weist das Dosiersystem eine Druckluftversorgung mit zumindest einem Luftschaltventil und/oder zumindest einem Proportionalventil zur Bereitstellung von Druckluft auf, wobei stromauf oder stromab des Luftschaltventils und/oder des Proportionalventils ein erster Abzweig mit einem ersten Rückschlagventil und/oder einem Luftschaltventil angeordnet ist, wobei der erste Abzweig in die Ausgangsleitung zu der ersten Dosierstelle mündet.

Durch eine Öffnung des zweiten Luftschaltventils oder ein Einstellen eines Luftdruckes, der oberhalb des Öffnungsdruckes des ersten Rückschlagventils liegt, kann hierdurch Druckluft zur ersten Dosierstelle geleitet werden, um die erste Dosierstelle durch ein Freiblasen von Reduktionsmittelrückständen zu befreien.

Vorzugsweise weist das Dosiersystem eine Druckluftversorgung mit zumindest einem Luftschaltventil und/oder zumindest einem Proportionalventil zur Bereitstellung von Druckluft auf, wobei stromab des Luftschaltventils und/oder des Proportionalventils ein zweiter Abzweig mit einem zweiten Rückschlagventil angeordnet ist, wobei der zweite Abzweig in die Reduktionsmittelführende Leitung der zweiten Dosierstelle mündet.

Durch ein Einstellen eines Luftdruckes, der oberhalb des Öffnungsdruckes des zweiten Rückschlagventils liegt, kann hierdurch Druckluft in die Reduktionsmittelführende Leitung der zweiten Dosierstelle geleitet werden, um die Reduktionsmittelführende Leitung dieser zweiten Dosierstelle durch ein Freiblasen von Reduktionsmittelrückständen zu befreien.

Ein Freiblasen kann somit für beide Dosierstellen völlig getrennt voneinander durchgeführt werden, sowohl in zeitlicher Sicht als auch aus drucktechnischer Sicht. Der Luftvolumenstrom kann auch geringer gehalten werden, wenn nacheinander die Düsen freigeblasen werden. Dies bewirkt einen geringeren Druckabfall in der Druckluftzuleitung vom Druckluftsystem des Kraftfahrzeuges zum Dosiersystem. Ferner ist der Druck und somit der Volumenstrom beim Freibasen mit einen Schaltventil in dem Abzweig zur ersten Dosierstelle höher, wodurch die Reinigungswirkung verbessert wird.

Ohne ein solches Luftschaltventil in dem ersten Abzweig zur ersten Dosierstelle muss in dem Abzweig ein erstes Rückschlagventil angeordnet sein. In diesem Fall erfolgt ein Freiblasen der ersten Dosierstelle erst dann, wenn ein Luftdruck anliegt, der oberhalb des Öffnungsdruckes des ersten Rückschlagventils liegt.

In dem zweiten Abzweig, der in die Reduktionsmittelführende Leitung zur zweiten Dosierstelle mündet, ist vorzugsweise ein zweites Rückschlagventil angeordnet. Während des Dosierbetriebes über die zweite Dosierstelle, an der die Aerosolbildung mittels Druckluft erfolgt, liegt der eingestellte Luftdruck unterhalb des Öffnungsdruckes des zweiten Rückschlagventils. Zu einem Freiblasen der Düse an der zweiten Dosierstelle wird der Luftdruck auf ein Druckniveau eingestellt, welches oberhalb des Öffnungsdruckes des zweiten Rückschlagventils liegt. Hierdurch öffnet das zweite Rückschlagventil und die Reduktionsmittelführende Leitung zur zweiten Dosierstelle wird mittels Druckluft freigeblasen.

Besonders vorteilhaft bei dem Verfahren zum Betrieb eines Reduktionsmitteldosiersystems zur Einspritzung eines Reduktionsmittels in den Abgasstrom eines Verbrennungsmotors, insbesondere eines Fahrzeuges, zur selektiven katalytischen Reduktion, mit zumindest einer Förderpumpe, mittels derer Reduktionsmittel aus einem Reduktionsmitteltank über eine Saugleitung aus dem Tank angesaugt, über zumindest eine Druckleitung gefördert und über zumindest eine Dosierstelle in den Abgasstrom des Verbrennungsmotors eingeleitet wird, ist es, dass die Druckleitung zumindest ein schaltbares Mehrwegeventil aufweist, an welches zumindest zwei Ausgangsleitungen angeschlossen sind, die in zwei verschiedene Dosierstellen münden, über die das Reduktionsmittel in den Abgasstrom einleitbar ist, und wobei das Mehrwegeventil angesteuert wird, um eine der beiden Ausgangsleitungen mit dem geförderten Reduktionsmittel oder alternierend beide Ausgangsleitungen abwechselnd mit dem geförderten Reduktionsmittel zu beaufschlagen und das Reduktionsmittel über die erste Dosierstelle oder die zweite Dosierstelle oder in zeitlicher Folge alternierend über beide Dosierstellen in den Abgasstrom einzuleiten.

In Bezug auf das erfindungsgemäße Verfahren zum Betrieb des Reduktionsmitteldosiersystems zur Einspritzung eines Reduktionsmittels in den Abgasstrom eines Verbrennungsmotors gelten dieselben Erläuterungen wie zuvor.

Vorzugsweise ist die erste Dosierstelle durch eine beheizbare Einspritzdüse gebildet, wobei das über die erste Dosierstelle geleitete Reduktionsmittel in der beheizbaren Einspritzdüse vor der Einleitung in den Abgasstrom verdampft wird.

Wie erläutert kann dabei die erste Dosierstelle stromauf eines ersten SCR-Katalysators in Form eines Vorkatalysators zur selektiven katalytischen Reduktion in den Abgastrakt münden.

Besonders bevorzugt ist die zweite Dosierstelle durch eine Zweistoffdüse gebildet ist, wobei das über die zweite Dosierstelle geleitete Reduktionsmittel innerhalb oder außerhalb der Zweistoffdüse mittels Druckluft zerstäubt wird.

Dabei kann eine Bereitstellung der Druckluft zur Zerstäubung des Reduktionsmittels durch eine Druckluftversorgung des Dosiersystems und/oder durch ein kraftfahrzeugseitiges Druckluftsystem erfolgen.

Dabei kann die zweite Dosierstelle stromauf eines zweiten SCR-Katalysators in Form eines Hauptkatalysators zur selektiven katalytischen Reduktion in den Abgastrakt münden.

Bevorzugt handelt es sich bei der Förderpumpe um eine intermittierend fördernde Pumpe mit aufeinander folgenden Pumpenhüben, insbesondere eine Magnetkolbenpumpe, wobei die Ansteuerung des Mehrwegeventils synchron zu den Pumpenhüben erfolgt, indem nach jedem Pumpenhub oder nach einer festlegbaren Anzahl von Pumpenhüben zwischen den beiden Ausgangsleitungen umgeschaltet wird.

Vorzugsweise erfolgt das Umschalten des Mehrwegeventils nur in den zeitlichen Phasen der nichtaktivierten Pumpe und mit einer festlegbaren zeitlichen Verzögerung nach einen Pumpenhub, so dass in dem Moment des Umschaltens des Mehrwegeventils kein Reduktionsmittelförderstrom vorliegt.

Vorzugsweise weist das Dosiersystem eine Druckluftversorgung mit zumindest einem Luftschaltventil und/oder einem insbesondere pulsweitenmodulierten Proportionalventil zur Bereitstellung von Druckluft auf, wobei über die Ansteuerung des Luftschaltventils und/oder des Proportionalventils eine Regelung der Druckluftförderzeiten und/oder eine Regelung des Luftdruckes erfolgt.

Vorzugsweise erfolgt ein Freiblasen einer oder beider der beiden Dosierstellen mittels Druckluft während des Dosierbetriebes, insbesondere wenn eine Verstopfung einer oder beider Dosierstellen detektiert wird, insbesondere dass für die Dauer des Freiblasens die Reduktionsmitteldosierung ausgesetzt wird oder die Reduktionsmitteldosierung während des Freiblasens der einen Dosierstelle über die jeweils andere Dosierstelle erfolgt, wobei vorzugsweise eine Dosierpause im Schubbetrieb des Fahrzeuges genutzt wird.

Erfindungsgemäß ist wie erläutert ein Umschalten der Reduktionsmitteldosierung zwischen zwei Dosierstellen vorgesehen. Bevorzugt ist dabei die erste Dosierstelle durch eine beheizbare Düse zur Einleitung des Reduktionsmittels in den Abgastrakt vor einem Vorkatalysator und die zweite Dosierstelle durch eine luftunterstützte Zweistoffdüse vor einem Hauptkatalysator gebildet. Beim Betrieb des Reduktionsmitteldosiersystems kann dabei das Umschalten zwischen den beiden Dosierstellen variiert werden.

Das Umschalten kann verzögert werden, z.B. bei einem Temperaturanstieg des Abgases nach Beendigung der Kaltstartphase und Übergabe auf den Hauptkatalysator mit der Zweistoffdüse an der zweiten Dosierstelle und den damit verbundenen höheren Reduktionsmitteldosiermengen. Das gleiche gilt beim Abfallen der Abgastemperatur und der Übergabe auf die beheizbare Düse an der ersten Dosierstelle und die Übergabe an den Vorkatalysator. Übersetzt bedeutet dies eine zeitliche Hysterese bzw. Temperaturhysterese bei Temperaturwechsel über bzw. unter den für den Hauptkatalysator beginnenden Temperaturbereich mit ausreichend gutem Wirkungsgrad. Das bedeutet, dass kein ständiges Wechseln zwischen den beiden Dosierstellen stattfindet, falls gerade nur eine Dosierstelle betrieben wurde. Bei gleichzeitigem Betrieb beider Dosierstellen kann damit das Abschalten einer Dosierstelle verzögert werden. Mit dem Begriff des gleichzeitigen Betriebes ist dabei eine alternierende Beschickung der beiden Dosierstellen mit einem Wechsel nach jedem Pumpenhub oder nach einer bestimmten Anzahl von Pumpenhüben gemeint, wie dies oben erläutert wurde. Evtl. ist dieser Zustand des Abschaltens einer der beiden Dosierstellen nur von kurzer Dauer, wie beispielsweise im Stopp-&-Go-Betrieb und die eigentlich abzuschaltende Dosierstelle wird doch direkt ein wenig später wieder genutzt. Dies ist besonders für die beheizbare Düse wichtig, da diese eine Vorlaufzeit benötigt, um elektrisch vorgeheizt und die beheizbare Düse auf eine gewisse Temperatur eingeregelt sein sollte, bevor sie von Reduktionsmittel durchströmt wird. Das Einschalten der elektrischen Heizung dieser beheizbaren Düse sollte nur dann erfolgen, wenn sie auch wirklich genutzt wird oder werden kann und das Ausschalten sollte nur erfolgen, wenn eine entsprechend hohe Abgastemperatur die Nutzung dieser beheizbaren Düse für einen absehbar längeren Zeitraum nicht mehr erforderlich macht.

Allerdings kann die beheizbare Düse und damit die erste Dosierstelle auch völlig unabhängig von der Abgastemperatur oder der Hysterese betrieben werden, damit der Stickoxidumsatz weiter gesteigert werden kann, falls dies in einigen Motorbetriebspunkten erforderlich ist.

Ferner kann in Dosierpausen der beheizbaren Düse oder - wenn erforderlich - ein Freibrennen der beheizbaren Düse erfolgen, falls sich Ablagerungen in der beheizbaren Düse zeigen. Diese können durch einen Drucksensor während der Reduktionsmittelförderung oder durch Druckmessung beim Freiblasen detektiert werden.

Mehrere Ausführungsbeispiele der Erfindung sind in den Figuren dargestellt und werden nachfolgend erläutert. Es zeigen:
- Fig. 1: Eine schematische Darstellung des Schaltplans einer ersten Ausführungsform eines Reduktionsmitteldosiersystems;
- Fig. 2: eine schematische Darstellung des Schaltplans einer zweiten Ausführungsform eines Reduktionsmitteldosiersystems;
- Fig. 3: eine schematische Darstellung des Schaltplans einer dritten Ausführungsform eines Reduktionsmitteldosiersystems;
- Fig. 4: eine schematische Darstellung des Schaltplans einer vierten Ausführungsform eines Reduktionsmitteldosiersystems.

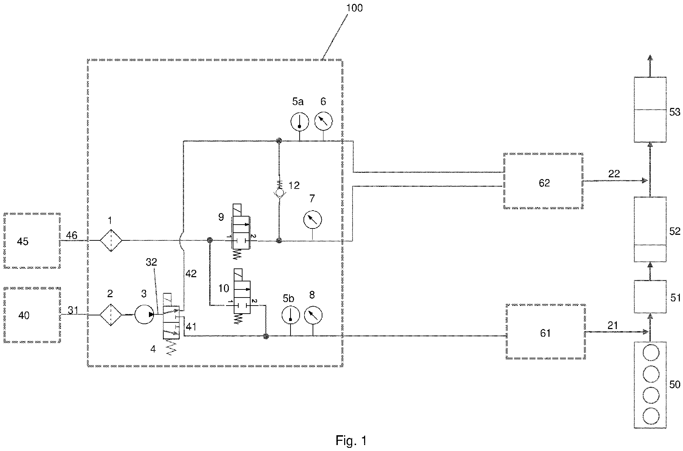

In den Figuren 1 bis 4 sind die Schaltpläne von vier verschiedenen Ausführungsformen von Reduktionsmitteldosiersystemen schematisch dargestellt. Identische Bauteile sind mit denselben Bezugszeichen gekennzeichnet. Der schematisch dargestellte Verbrennungsmotor 50 sowie der Abgastrakt des Verbrennungsmotors mit den Katalysatoren 51, 52, 53 sind nicht Bestandteil des erfindungsgemäßen Reduktionsmitteldosiersystems. Der Abgastrakt des Verbrennungsmotors 50 weist in Strömungsrichtung des Abgases nacheinander einen Vorkatalysator 51 zur selektiven katalytischen Reduktion, einen ersten Dieseloxidationskatalysator 52 mit Dieselpartikelfilter sowie einen Hauptkatalysator 53 zur selektiven katalytischen Reduktion von Stickoxiden im Abgas mit einem weiteren, zweiten Dieseloxidationskatalysator auf.

Mittels der Förderpumpe 3 wird das flüssige Reduktionsmittel aus dem Tank 40 über die Saugleitung 31 angesaugt und über die Druckleitung 32 gefördert. In der Saugleitung ist ein Filter 2 angeordnet, mittels dessen das Reduktionsmittel von Verunreinigungen befreit wird, bevor dieses in die Pumpe 3 des Reduktionsmitteldosiersystems eintritt. Bei der Förderpumpe 3 handelt es sich um eine Dosierpumpe mit sehr guter Dosiergenauigkeit, die den Gesamtmassenstrom an Reduktionsmittel liefert. Als Reduktionsmittel kann insbesondere eine Lösung gemäß DIN 70070 eingesetzt werden. In den dargestellten Ausführungsbeispielen handelt es sich bei der Förderpumpe 3 um eine intermittierend fördernde Pumpe.

In der Druckleitung stromab der Förderpumpe 3 ist ein schaltbares Mehrwegeventil 4 angeordnet, dessen zwei Ausgänge in die beiden Ausgangsleitungen 41, 42 münden. Bei dem schaltbaren Mehrwegeventil handelt es sich um ein 3/2 Wege-Ventil, welches für eine Anwendung bei Förderung eines Reduktionsmittels, insbesondere eines Reduktionsmittels gemäß DIN 70070, geeignet und frostfest im gefüllten Zustand ist. Ferner ist das Mehrwegeventil 4 geeignet für eine Betriebstemperatur des geförderten Mediums in einem Bereich von zumindest -7°C bis +75°C. Die Betriebsspannung des schaltbaren Mehrwegeventils 4 liegt vorzugsweise bei maximal 24 V, um das schaltbare Mehrwegeventil 4 über ein mit dem Bordnetz eines Kraftfahrzeuges verbundenen und gespeisten Steuergerätes ansteuern und elektrisch versorgen zu können. Die Schaltfrequenz des schaltbaren Mehrwegeventils 4 liegt bevorzugt bei 50 Hz.

Die erste Ausgangsleitung mündet in die erste Dosierstelle 21. An der ersten Dosierstelle 21 ist eine elektrisch beheizbare Düse 61 angeordnet, mittels derer insbesondere während einer Kaltstartphase des Verbrennungsmotors 50 das Reduktionsmittel vor der Einleitung über die Dosierstelle 21 in den Abgastrakt des Verbrennungsmotors 50 verdampft werden kann. Hierzu weist die beheizbare Düse 61 eine elektrische Widerstandsheizung auf, deren Heizleistung mittels eines nicht dargestellten Steuergerätes geregelt wird. Die erste Ausgangsleitung 41 weist einen Temperatursensor 5b sowie einen Drucksensor 8 auf. In einer nicht dargestellten Alternative ist anstelle eines Temperatursensors und eines Drucksensors ein kombinierter Temperatur- und Drucksensor angeordnet.

Mittels des Temperatursensors 5b wird die Temperatur des geförderten Reduktionsmittels in der ersten Ausgangsleitung 41 erfasst. Diese Größe bestimmt insbesondere die an der beheizbaren Düse 61 einzustellende Heizleistung.

Mittels des Drucksensors 8 wird der Druck in der ersten Ausgangsleitung 41 erfasst. Hierüber lässt sich eine etwaige Verstopfung der beheizbaren Düse 61 an der ersten Dosierstelle 21 detektieren.

Die erste Dosierstelle 21 mündet stromab des Verbrennungsmotors 50 in den Abgastrakt des Verbrennungsmotors 50 und stromauf eines Vorkatalysators 51 zur selektiven katalytischen Reduktion von Stickoxiden im Abgas. Dem Vorkatalysator 51 ist im Abgastrakt ein erster Dieseloxidationskatalysator 52 mit Dieselpartikelfilter nachgeschaltet.

Die zweite Ausgangsleitung mündet in die zweite Dosierstelle 22. An der zweiten Dosierstelle 22 ist eine luftunterstützte Zweistoffdüse 62 angeordnet. Mittels dieser Zweistoffdüse 62 wird das Reduktionsmittel mittels Druckluft zu einem Aerosol zerstäubt und über die zweite Dosierstelle 22 in den Abgastrakt des Verbrennungsmotors 50 eingeleitet.

Mittels des Temperatursensors 5a wird die Temperatur des geförderten Reduktionsmittels in der zweiten Ausgangsleitung 42 erfasst.

In einer nicht dargestellten Alternative ist nur einer der beiden Temperatursensoren 5a, 5b angeordnet. Dies ist ausreichend, da in beiden Ausgangsleitungen 41, 42 annähernd dieselbe Reduktionsmitteltemperatur vorherrscht.

Die zweite Dosierstelle 22 ist im Abgastrakt stromab des ersten Dieseloxidationskatalysators 52 und stromauf des Hauptkatalysators 53 zur selektiven katalytischen Reduktion von Stickoxiden im Abgas angeordnet.

Bei ausreichend hohen Abgastemperaturen ist die Einleitung des mittels der Zweistoffdüse 62 gebildeten Reduktionsmittelaerosols ausreichend, da die kleinen Tröpfchen des Aerosols im heißen Abgas unmittelbar verdampfen und die selektive katalytische Reduktion der Stickoxide in dem nachfolgenden Hauptkatalysator 53 mit hoher Qualität erfolgt.

Mittels des schaltbaren Mehrwegeventils 4 erfolgt eine Zuweisung der einzelnen Pumpenhübe der Förderpumpe 3 auf die erste Dosierstelle 21 oder auf die zweite Dosierstelle 22 durch das pumpensynchron getaktete Mehrwegeventil 4. Bei einer nicht vollständig abdichtenden Pumpe kann zusätzlich eine Stellung des Mehrwegeventils 4 "Beide Kanäle geschlossen" vorgesehen sein. Hierdurch kann die Anlagenkonfiguration bei verschiedenen Pumpentypen Anwendung finden.

Beim alleinigen Betrieb der beheizbaren Düse 61 oder der luftunterstützen Düse 62 kann auf die hochfrequente Taktung des Mehrwegeventils 4 verzichtet werden.

Bei Parallelbetrieb beider Düsen 61, 62 kann insbesondere eine Blockbildung der Pumpenhübe erfolgen. Dabei ist ein Block von Pumpenhüben eine Aufeinanderfolge von Pumpenhüben an eine Düse 61, 62. Bei gleichem Verhältnis der Blöcke beider Düsen 61, 62 ist eine Kumulierung der Blöcke und erweiterte Blockbildung zur Verringerung der Umschaltvorgänge möglich. Bei variierenden Verhältnissen der Blöcke gilt das analog.

Zur Bereitstellung der Druckluft insbesondere an der luftunterstützten Zweistoffdüse 62 verfügt das Dosiersystem über eine Druckluftleitung 46, die an das kraftfahrzeugseitige Druckluftsystem 45 angeschlossen ist. Mittels des kraftfahrzeugseitigen Druckluftsystems 45 wird somit die für den Betrieb des Dosiersystems benötigte Druckluft bereitgestellt. In einer nicht dargestellten Alternative verfügt das Dosiersystem selbst über einen Kompressor zur Bereitstellung von Druckluft.

Die Druckluftleitung 46 weist einen Luftfilter 1 auf, mittels dessen die eingeleitete Druckluft gefiltert wird. Die Druckluftleitung 46 weist ferner ein pulsweitenmoduliertes Proportionalventil 9 auf. Über die Ansteuerung des Taktverhältnisses des Proportionalventils 9 kann der am Ausgang des Proportionalventils 9 anliegende Luftdruck geregelt werden. Zur Überwachung des Ausgangsdrucks des Proportionalventils 9 weist die Druckluftleitung 46 einen Drucksensor 7 auf.

Der Ausgang des Proportionalventils 9 mündet in die Zweistoffdüse 62, mittels derer unter Zuhilfenahme der Druckluft die Aerosolbildung zur Einleitung des Reduktionsmittelaerosols über die zweite Dosierstelle 22 in den Abgastrakt des Verbrennungsmotors 50 erfolgt.

Die Druckluft findet neben der Aerosolbildung ferner Anwendung zur Reinigung der Düsen 61, 62, indem ein entsprechendes Freiblasen der Düsen 61, 62 je nach Bedarf durchgeführt wird. Dieses Freiblasen kann zum einen durch die Detektion einer Verstopfung mittels der Drucksensoren 6, 8 in den reduktionsmittelführenden Ausgangsleitungen 41, 42 ausgelöst werden. Ferner kann bei einer Unterbrechung und/oder nach der Beendigung der Dosierung ein Freiblasen der Düsen 61, 62 durchgeführt werden, um Ablagerungen des Reduktionsmittels zu entfernen. Derartige Ablagerungen könnten durch eine Kristallisation zu Verstopfungen führen. Ferner wird durch ein Freiblasen der Düsen 61, 62 mittels Druckluft nach der Beendigung der Dosierung die Frostsicherheit des Reduktionsmitteldosiersystems erhöht.

Bei dem in Figur 1 dargestellten ersten Ausführungsbeispiel weist die Druckluftleitung 46 stromauf des Proportionalventils 9 einen ersten Abzweig auf, der stromab des schaltbaren Mehrwegeventils 4 in die reduktionsmittelführende erste Ausgangsleitung 41 mündet. Dieser erste Abzweig weist ein Luftschaltventil 10 auf. Durch eine Öffnung des Luftschaltventils 10 wird während einer Unterbrechung oder nach Beendigung der Dosierung über die beheizbare Düse 61 die reduktionsmittelführende erste Ausgangsleitung 41 sowie die Düse 61 von Reduktionsmittel befreit, indem ein Freiblasen mittels Druckluft erfolgt. Nach Beendigung des Freiblasens der beheizbaren Düse 61 wird das Luftschaltventil 10 wieder geschlossen.

Stromab des Proportionalventils 9 weist die Druckluftleitung 46 einen zweiten Abzweig auf, der in die reduktionsmittelführende zweite Ausgangsleitung 42 mündet, die zur luftunterstützten Zweistoffdüse 62 führt. Dieser zweite Abzweig weist ein Rückschlagventil 12 auf. Sofern mittels des Drucksensors 6 eine Verstopfung detektiert wird oder die Dosierung über die Zweistoffdüse 62 unterbrochen oder beendet wird, kann über den zweiten Abzweig Druckluft in die reduktionsmittelführende zweite Ausgangsleitung 42 eingeleitet werden, um die zweite Ausgangsleitung 42 sowie die Zweistoffdüse 62 von Reduktionsmittel zu befreien. Hierzu wird der Druck am Ausgang des Proportionalventils 9 soweit erhöht, dass dieser oberhalb des Öffnungsdruckes des Rückschlagventils 12 liegt. Hierdurch öffnet das Rückschlagventil 12 automatisch und die reduktionsmittelführende zweite Ausgangsleitung 42 und die Zweistoffdüse 62 wird mittels der Druckluft freigeblasen und von Reduktionsmittelrückständen und/oder Verstopfungen befreit.

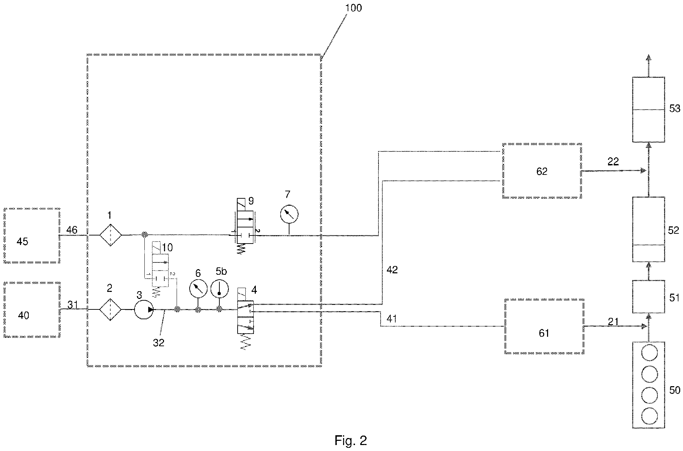

Das zweite Ausführungsbeispiel gemäß Figur 2 unterscheidet sich von dem ersten Ausführungsbeispiel gemäß Figur 1 dadurch, dass der lediglich eine Abzweig ausgehend von der Druckluftleitung 46 stromauf des Proportionalventils 9 angeordnet ist, wobei dieser Abzweig ein Luftschaltventil 10 aufweist und stromauf des schaltbaren Mehrwegeventils 4 in die Druckleitung 32 der Förderpumpe 3 mündet. Zur Reinigung der reduktionsmittelführenden beiden Ausgangsleitungen 41, 42 sowie der beiden Düsen 61, 62 von Reduktionsmittel mittels Druckluft wird die über den Abzweig und das Luftschaltventil 10 in die Druckleitung 32 eingeleitete Druckluft mittels des Mehrwegeventils 4 auf die beiden Ausgangsleitungen 41, 42 geschaltet. Der besondere Vorteil der Anlagenkonfiguration gemäß des zweiten Ausführungsbeispiels gemäß Figur 2 ist der verringerte anlagentechnische Aufwand sowie ferner die Tatsache, dass auch das schaltbare Mehrwegeventil 4 mittels der Druckluft von Reduktionsmittelrückständen befreit wird. Hierdurch wird die Frostsicherheit des schaltbaren Mehrwegeventils 4 erhöht.

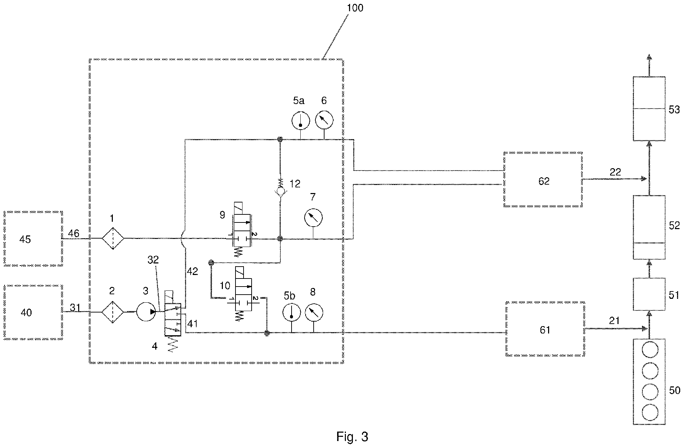

Das dritte Ausführungsbeispiel gemäß Figur 3 unterscheidet sich von dem ersten Ausführungsbeispiel gemäß Figur 1 dadurch, dass der erste Abzweig ausgehend von der Druckluftleitung 46 stromab des Proportionalventils 9 angeordnet ist. In diesem Fall bildet der Ausgang des Proportionalventils 9 den Eingang des Luftschaltventils 10. Hierdurch kann der Luftdruck, der über den ersten Abzweig in die erste Ausgangsleitung 41 sowie die Düse 61 eingeleiteten Druckluft ebenfalls über das Proportionalventil 9 geregelt werden. Im Übrigen entspricht das dritte Ausführungsbeispiel gemäß Figur 3 dem ersten Ausführungsbeispiel.

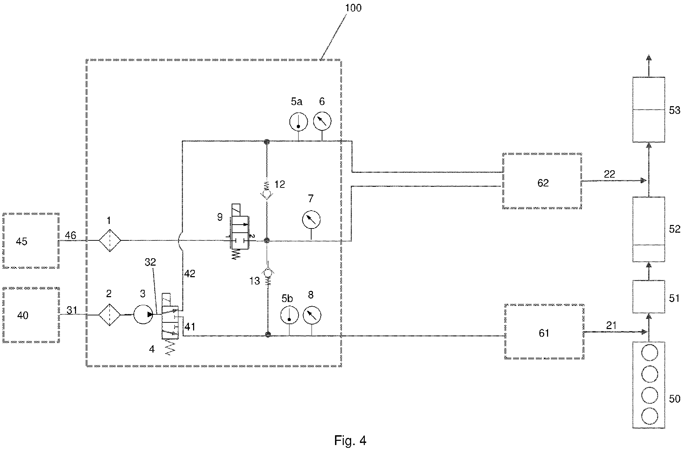

Bei dem vierten Ausführungsbeispiel gemäß Figur 4 wird die Möglichkeit der Reinigung der beiden Düsen 61, 62 mittels Druckluft über zwei stromab des Proportionalventils 9 angeordnete Abzweige realisiert. Durch die Anordnung der beiden Abzweige stromab des Proportionalventils 9 kann wiederum der Luftdruck, der an den beiden Abzweigen anliegt, über die Ansteuerung des Proportionalventils 9 geregelt werden.

Der erste Abzweig weist ein Rückschlagventil 13 auf und mündet in die reduktionsmittelführende erste Ausgangsleitung 41 zur beheizbaren Düse 61 an der ersten Dosierstelle 21.

Der zweite Abzweig weist ein Rückschlagventil 12 auf und mündet in die reduktionsmittelführende zweite Ausgangsleitung 42 zur Zweistoffdüse 62 an der zweiten Dosierstelle 22.

Die Öffnungsdrücke der Rückschlagventile 12, 13 können identisch oder unterschiedlich sein. Grundsätzlich liegen die Öffnungsdrücke der Rückschlagventile 12, 13 oberhalb des Druckniveaus der Druckluft am Ausgang des Proportionalventils 9 während des Dosierbetriebes, sodass die Rückschlagventile 12, 13 während des Dosierbetriebes geschlossen sind. Zum Freiblasen der Düsen 61, 62 wird der Druck der Druckluft am Ausgang des Proportionalventils 9 auf ein Druckniveau oberhalb der Öffnungsdrücke der Rückschlagventile 12, 13 erhöht, wodurch die Rückschlagventile 12, 13 automatisch öffnen und die beiden Ausgangsleitungen 41, 42 und die beiden Düsen 61, 62 mittels Druckluft freigeblasen werden. Sofern die Öffnungsdrücke der Rückschlagventile 12, 13 identisch sind, erfolgt das Öffnen der Rückschlagventile 12, 13 und damit der Beginn des Freiblasens der beiden Ausgangsleitungen 41, 42 und der beiden Düsen 61, 62 mittels Druckluft gleichzeitig.

Alternativ können Rückschlagventile 12, 13 mit unterschiedlichen Öffnungsdrücken angeordnet sein. So kann im ersten Abzweig ein Rückschlagventil 13 mit einem geringeren Öffnungsdruck von beispielsweise 2 bar angeordnet sein, während im zweiten Abzweig ein Rückschlagventil 12 mit einem höheren Öffnungsdruck von beispielsweise 3 bar angeordnet ist. In diesem Fall würde zunächst die erste Ausgangsleitung 41 und die beheizbare Düse 61 an der ersten Dosierstelle 21 freigeblasen und erst nach einer weiteren Druckerhöhung am Ausgang des Proportionalventils 9 über den Öffnungsdruck des Rückschlagventils 12 im zweiten Abzweig würden sodann die reduktionsmittelführende zweite Ausgangsleitung 42 und die Zweistoffdüse 62 an der zweiten Dosierstelle 22 mittels Druckluft freigeblasen.

Alternativ kann der Öffnungsdruck des Rückschlagventils 13 im ersten Abzweig größer sein als der Öffnungsdruck des Rückschlagventils 12 im zweiten Abzweig.

Die Komponenten des Reduktionsmitteldosiersystems sind zu einer Baugruppe 100 zusammengefasst, die über sämtliche benötigten Eingangsanschlüsse zur Verbindung insbesondere mit dem Reduktionsmitteltank 40 und der kraftfahrzeugseitigen Druckluftversorgung 45 verfügt, sowie ferner über die Ausgänge zu den Düsen 61, 62 an den beiden Dosierstellen 21, 22. Weiter verfügt die Baugruppe 100 über entsprechende Anschlüsse zur Verbindung mit einem nicht dargestellten Steuergerät. Mittels des Steuergerätes werden die Messwerte der Sensoren ausgewertet und insbesondere die Förderpumpe 3, das Mehrwegeventil 4, das Proportionalventil 9 und das Luftschaltventil 10 angesteuert und betätigt.

Die Komponenten der Baugrippe 100 des Reduktionsmitteldosiersystems können auf einem wärmeleitenden Komponententräger angeordnet sein. In diesem Fall herrscht in beiden Ausgangsleitungen 41, 42 nahezu dieselbe Reduktionsmitteltemperatur vor, sodass die oben erwähnte nicht dargestellte Alternative eines Reduktionsmitteldosiersystems mit lediglich einem der beiden Temperatursensoren 5a, 5b realisiert werden kann. Auch bei den Ausführungsbeispielen gemäß den Figuren 1, 3 und 4 kann dann einer der beiden Temperatursensoren 5a, 5b entfallen, ohne dass der Betrieb des Reduktionsmitteldosiersystems beeinträchtigt wäre.

## Patentansprüche

1. Reduktionsmitteldosiersystem zur Einspritzung eines Reduktionsmittels in den Abgasstrom eines Verbrennungsmotors (50), insbesondere eines Fahrzeuges, zur selektiven katalytischen Reduktion mit zumindest einer Förderpumpe (3), mittels derer Reduktionsmittel aus einem Reduktionsmitteltank (40) über eine Saugleitung (31) angesaugt und über zumindest eine Druckleitung (32) zu zumindest einer Dosierstelle zur Einleitung in den Abgasstrom des Verbrennungsmotors (50) gefördert wird, **dadurch gekennzeichnet, dass** die Druckleitung (32) zumindest ein schaltbares Mehrwegeventil (4) aufweist, an welches zumindest zwei Ausgangsleitungen (41, 42) angeschlossen sind, die in zwei verschiedene Dosierstellen (21, 22) münden, über die das Reduktionsmittel in den Abgasstrom einleitbar ist.

2. Reduktionsmitteldosiersystem nach Anspruch 1, **dadurch gekennzeichnet, dass** die erste Dosierstelle (21) durch eine beheizbare Einspritzdüse (61) gebildet ist, mittels derer das über die erste Dosierstelle (21) geleitete Reduktionsmittel vor der Einleitung in den Abgasstrom verdampfbar ist.

3. Reduktionsmitteldosiersystem nach Anspruch 1 oder 2, **dadurch gekennzeichnet, dass** die zweite Dosierstelle (22) durch eine Zweistoffdüse (62) gebildet ist, mittels derer das über die zweite Dosierstelle (22) geleitete Reduktionsmittel innerhalb oder außerhalb der Zweistoffdüse (62) mittels Druckluft zerstäubt werden kann, insbesondere dass das Dosiersystem eine Druckluftversorgung (45) zur Bereitstellung der Druckluft zur Zerstäubung des Reduktionsmittels aufweist.

4. Reduktionsmitteldosiersystem nach einem der vorherigen Ansprüche, **dadurch gekennzeichnet, dass** es sich bei der Förderpumpe (3) um eine intermittierend fördernde Pumpe mit aufeinander folgenden Pumpenhüben handelt, insbesondere eine Magnetkolbenpumpe.

5. Reduktionsmitteldosiersystem nach einem der vorherigen Ansprüche, **dadurch gekennzeichnet, dass** das Dosiersystem eine Druckluftversorgung (45) mit zumindest einem Luftschaltventil (10) und/oder zumindest einem insbesondere pulsweitenmodulierten Proportionalventil (9) zur Bereitstellung von Druckluft insbesondere zur Zerstäubung des Reduktionsmittels mittels Druckluft an der zweiten Dosierstelle (22) aufweist.

6. Reduktionsmitteldosiersystem nach einem der vorherigen Ansprüche, **dadurch gekennzeichnet, dass** das Dosiersystem eine Druckluftversorgung (45) mit zumindest einem Ventil, insbesondere einem pulsweitenmodulierten Proportionalventil (9), zur Bereitstellung von Druckluft aufweist, wobei stromauf oder stromab des Ventils (9) ein Abzweig angeordnet ist, der ein Luftschaltventil (10) aufweist und wobei der Abzweig in die Ausgangsleitung (41) zu der ersten Dosierstelle (21) mündet.

7. Reduktionsmitteldosiersystem nach einem der vorherigen Ansprüche, **dadurch gekennzeichnet, dass** das Dosiersystem eine Druckluftversorgung (45) mit zumindest einem Luftschaltventil und/oder zumindest einem Proportionalventil (9) zur Bereitstellung von Druckluft aufweist, wobei stromauf oder stromab des Luftschaltventils und/oder des Proportionalventils (9) ein erster Abzweig mit einem ersten Rückschlagventil (13) und/oder einem Luftschaltventil (10) angeordnet ist, wobei der erste Abzweig in die Ausgangsleitung (41) zu der ersten Dosierstelle (21) mündet.

8. Reduktionsmitteldosiersystem nach einem der vorherigen Ansprüche, **dadurch gekennzeichnet, dass** das Dosiersystem eine Druckluftversorgung (45) mit zumindest einem Luftschaltventil und/oder zumindest einem Proportionalventil (9) zur Bereitstellung von Druckluft aufweist, wobei stromab des Luftschaltventils und/oder des Proportionalventils (9) ein zweiter Abzweig mit einem zweiten Rückschlagventil (12) angeordnet ist, wobei der zweite Abzweig in die Reduktionsmittelführende Leitung (42) der zweiten Dosierstelle (22) mündet.

9. Verfahren zum Betrieb eines Reduktionsmitteldosiersystems zur Einspritzung eines Reduktionsmittels in den Abgasstrom eines Verbrennungsmotors (50), insbesondere eines Fahrzeuges, zur selektiven katalytischen Reduktion mit zumindest einer Förderpumpe (3), mittels derer Reduktionsmittel aus einem Reduktionsmitteltank (40) über eine Saugleitung (31) aus dem Tank (40) angesaugt, über zumindest eine Druckleitung (32) gefördert und über zumindest eine Dosierstelle in den Abgasstrom des Verbrennungsmotors (50) eingeleitet wird, **dadurch gekennzeichnet, dass** die Druckleitung (32) zumindest ein schaltbares Mehrwegeventil (4) aufweist, an welches zumindest zwei Ausgangsleitungen (41, 42) angeschlossen sind, die in zwei verschiedene Dosierstellen (21, 22) münden, über die das Reduktionsmittel in den Abgasstrom einleitbar ist, und wobei das Mehrwegeventil (4) angesteuert wird, um eine der beiden Ausgangsleitungen (41, 42) mit dem geförderten Reduktionsmittel oder alternierend beide Ausgangsleitungen (41, 42) abwechselnd mit dem geförderten Reduktionsmittel zu beaufschlagen und das Reduktionsmittel über die erste Dosierstelle (21) oder die zweite Dosierstelle (22) oder in zeitlicher Folge alternierend über beide Dosierstellen (21, 22) in den Abgasstrom einzuleiten.

10. Verfahren nach Anspruch 9, **dadurch gekennzeichnet, dass** die erste Dosierstelle (21) durch eine beheizbare Einspritzdüse (61) gebildet ist, wobei das über die erste Dosierstelle (21) geleitete Reduktionsmittel in der beheizbaren Einspritzdüse (61) vor der Einleitung in den Abgasstrom verdampft wird.

11. Verfahren nach Anspruch 9 oder 10, **dadurch gekennzeichnet, dass** die zweite Dosierstelle (22) durch eine Zweistoffdüse (62) gebildet ist, wobei das über die zweite Dosierstelle (22) geleitete Reduktionsmittel innerhalb oder außerhalb der Zweistoffdüse (62) mittels Druckluft zerstäubt wird.

12. Verfahren nach einem der Ansprüche 9 bis 11, **dadurch gekennzeichnet, dass** es sich bei der Förderpumpe (3) um eine intermittierend fördernde Pumpe mit aufeinander folgenden Pumpenhüben handelt, insbesondere eine Magnetkolbenpumpe, und die Ansteuerung des Mehrwegeventils (4) synchron zu den Pumpenhüben erfolgt, indem nach jedem Pumpenhub oder nach einer festlegbaren Anzahl von Pumpenhüben zwischen den beiden Ausgangsleitungen (41, 42) umgeschaltet wird.

13. Verfahren nach Anspruch 12, **dadurch gekennzeichnet, dass** das Umschalten des Mehrwegeventils (4) nur in den zeitlichen Phasen der nichtaktivierten Pumpe (3) und mit einer festlegbaren zeitlichen Verzögerung nach einen Pumpenhub erfolgt, so dass in dem Moment des Umschaltens des Mehrwegeventils (4) kein Reduktionsmittelförderstrom vorliegt.

14. Verfahren nach einem der Ansprüche 9 bis 13, **dadurch gekennzeichnet, dass** das Dosiersystem eine Druckluftversorgung (45) mit zumindest einem Luftschaltventil (10) und/oder einem insbesondere pulsweitenmodulierten Proportionalventil (9) zur Bereitstellung von Druckluft aufweist, wobei über die Ansteuerung des Luftschaltventils (10) und/oder des Proportionalventils (9) eine Regelung der Druckluftförderzeiten und/oder eine Regelung des Luftdruckes erfolgt.

15. Verfahren nach einem der Ansprüche 9 bis 14, **dadurch gekennzeichnet, dass** ein Freiblasen einer oder beider der beiden Dosierstellen (21, 22) mittels Druckluft während des Dosierbetriebes erfolgt, insbesondere wenn eine Verstopfung einer oder beider Dosierstellen (21, 22) detektiert wird, insbesondere dass für die Dauer des Freiblasens die Reduktionsmitteldosierung ausgesetzt wird oder die Reduktionsmitteldosierung während des Freiblasens der einen Dosierstelle über die jeweils andere Dosierstelle erfolgt, wobei vorzugsweise eine Dosierpause im Schubbetrieb des Fahrzeuges genutzt wird.
